# EUROPEAN PATENT APPLICATION

(11) **EP 2 343 642 A1**
(43) Date of publication of application: **13.07.2011**
(21) Application number: 09179868.6
(22) Date of filing: 18.12.2009
(51) Int. Cl.: G06F 9/44, G05B 15/02, H04L 12/28

(54) **User interface panel**

(71) Applicant: Schneider Electric Buildings AB, 213 75 Malmö (SE)
(72) Inventor: Assarsson, Lars-Eric, 218 51 Klagshamn (SE); Olsson, Per-Ola, 214 40 Malmö (SE); Webrant, Martin, 211 55 Malmö (SE)
(74) Representative: Stenbäck, Maria Elisabeth

(57) **Abstract**

In a building control system a graphical user interface is indicated by specification of a control object in the building control system being received. The control object is associated with an address. A selection of a functional object from a set of predefined functional objects is received. The functional object is associated with a graphical object from a set of predefined graphical objects. The control object is associated with the functional object by providing to the graphical object a pointer to said address. The graphical object is provided with data relating to a target value of the pointer and a panel comprising the graphical object is generated.

## Description

### Technical field

The present invention relates to a building control system, and more particularly to methods and devices for generating a graphical user interface for a building control system.

### Background

In the building control industry it is common to control a plurality of field devices by computer implemented building control programs.

It is common to control a computer based building control system via a user interface of a personal computer. In general, different categories of users may be associated with different user interfaces.

A user interface for a building control system typically consists of viewers/tools for e.g. navigation, graphics, trend charts, schedules, alarms, events, displaying of video etc. These viewers/tools are generally displayed as separate parts (panes or windows) within the main window of the engineering tools and/or operating workstation software for the building control system.

US 6 433 801 discloses a portable intelligent communications device having a computer controlled touch screen display acting as a graphical user interface. The display shows a series of file folders having tabs that are displayed at different locations on the screen. The user can drag and drop the tabs (i.e., the control buttons) so that these controls can be re-ordered. Thereby the user may manipulate the user interface. However, there is still a need for an improved user interface for controlling a building control systems.

### Summary

In view of the above-mentioned and other drawbacks of the related art, it would be desirable to achieve an improved user interface for controlling a building control system. In addition, it may be desirable to allow and enable some level of customization of the user interface e.g. for different groups of users.

According to a first aspect of the invention there is provided a method for generating a graphical user interface for a building control system, comprising receiving specification of a control object in the building control system, the control object being associated with an address; receiving selection of a functional object from a set of predefined functional objects, the functional object being associated with a graphical object from a set of predefined graphical objects; associating the control object and the functional object by providing to the graphical object a pointer to the address; and generating a panel comprising the graphical object, the graphical object being provided with data relating to a target value of the pointer, thereby generating the graphical user interface. The disclosed method thus makes it possible to combine viewers/tools into one coherent seamless view - a panel - only using a simple layout and links to the existing control objects in the building control system.

The panel may further comprises a component list field and a navigation pane field. The graphical object may be associated with the navigation pane field. The panel may be arranged such that selection of components in the component list field affects contents of the navigation pane field. The panel may further comprises layout information.

The method may further comprise denoting the panel as a first panel; generating at least one second panel, the at least one second panel being linked to the first panel; and associating the at least one second panel with the graphical user interface. A panel may thus also combine one or more sub-panels, by linking to other panels.

The method may further comprise associating the at least one second panel with the navigation pane field of the first panel.

The method may further comprise generating a log file comprising a link to the panel.

The control object may be associated with at least one from a control program controlling the building control system and a field device in the building control system.

The target value may relate to a behavior of the control object and wherein the graphical object is arranged to indicate data relating to the behavior. The behavior may relate to a measurement of the control object.

The graphical object may comprise at least one selectable link, the selectable link being specified by the address.

According to a second aspect of the invention there is provided an apparatus for generating a graphical user interface for a building control system, comprising a receiver arranged to receive specification of a control object in the building control system, the control object being associated with an address; a receiver arranged to receive selection of a functional object from a set of predefined functional objects, the functional object being associated with a graphical object from a set of predefined graphical objects; a processing unit arranged to associate the control object and the functional object by providing to the graphical object a pointer to the address; and a processing unit arranged to generate a panel comprising the graphical object, the graphical object being provided with data relating to a target value of the pointer, thereby generating the graphical user interface.

According to a third aspect there is provided a computer program product, comprising computer program code which is stored on a computer-readable storage medium and which, when executed on a processor, carries out a method according to the first aspect.

The second and third aspects may generally have the same features and advantages as the first aspect.

Other aspects, features and advantages of the disclosed embodiments of the present invention will appear from the following detailed disclosure, from the attached claims as well as from the drawings.

Generally, all terms used in the claims are to be interpreted according to their ordinary meaning in the technical field, unless explicitly defined otherwise herein. All references to "a/an/the/said [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### Brief description of the drawings

Embodiments of the present invention will now be described in more detail, reference being made to the enclosed drawings, in which:
Fig. 1 is a schematic diagram of a building control system according to an embodiment.
Fig. 2 is a schematic diagram of a building control system according to an embodiment.
Fig. 3 is a schematic diagram of a panel according to an embodiment.
Fig. 4 is a schematic diagram of hierarchically ordered panels according to an embodiment.
Fig. 5 is a schematic diagram of a composite panel according to an embodiment.
Fig. 6 is a flowchart of a method according to embodiments.

### Detailed description of embodiments

Embodiments of the present invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Furthermore, like numbers refer to like elements throughout.

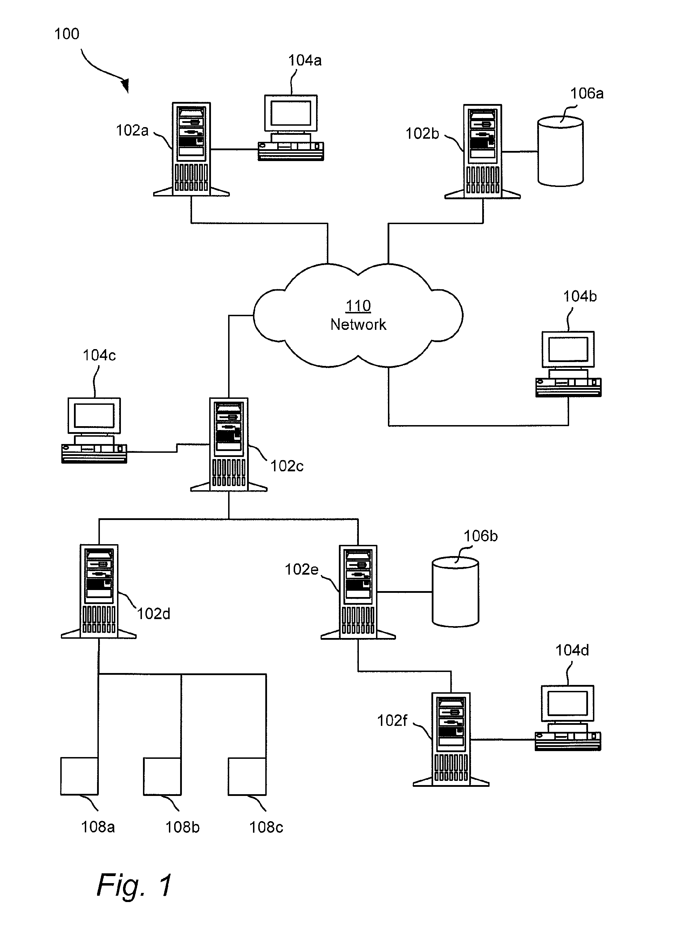

Figure 1 illustrates an example of a building control system 100. The system 100 comprises servers 102a, 102b, 102c, 102d, 102e, 102f. Servers 102a, 102b, 102c, 102d, 102e, 102f may store information, control programs, user interfaces, etc. associated with the building control system 100 (such as control thereof and access and/or authorization thereto). For example, the servers 102a, 102b, 102c, 102d, 102e, 102f may store data and execute control programs and thereby controlling control objects 108a, 108b, 108c.

Each control object 108a, 108b, 108c may be associated with a unique address in the network 110. Thereby information from the control objects 108a, 108b, 108c may be retrieved via user terminals 104a, 104b, 104c, 104d. Similarly the control objects108a, 108b, 108c may be provided with information via user terminals 104a, 104b, 104c, 104d. The control objects 108a, 108b, 108c may pertain to field devices which may be typical HVAC field devices. The control objects 108a, 108b, 108c may also represent control programs. The control objects 108a, 108b, 108c are thus typically located in a building (not shown) or in a digital representation thereof. As such a building may have several floors and each floor may have several rooms. The control objects 108a, 108b, 108c may for example relate to temperature regulating and/or indicating devices, electronic access control regulating and/or indicating devices, lighting regulating and/or indicating devices, and the like. The servers 102a, 102b, 102c, 102d, 102e, 102f may also store information indirectly via databases 106a, 106b. The information stored in the servers 102a, 102b, 102c, 102d, 102e, 102f and databases 106a, 106b may be accessed from the user terminals 104a, 104b, 104c, 104d. The servers 102a, 102b, 102c, 102d, 102e, 102f are operatively connected via a network 110 which may be wired, wireless or a combination of both.

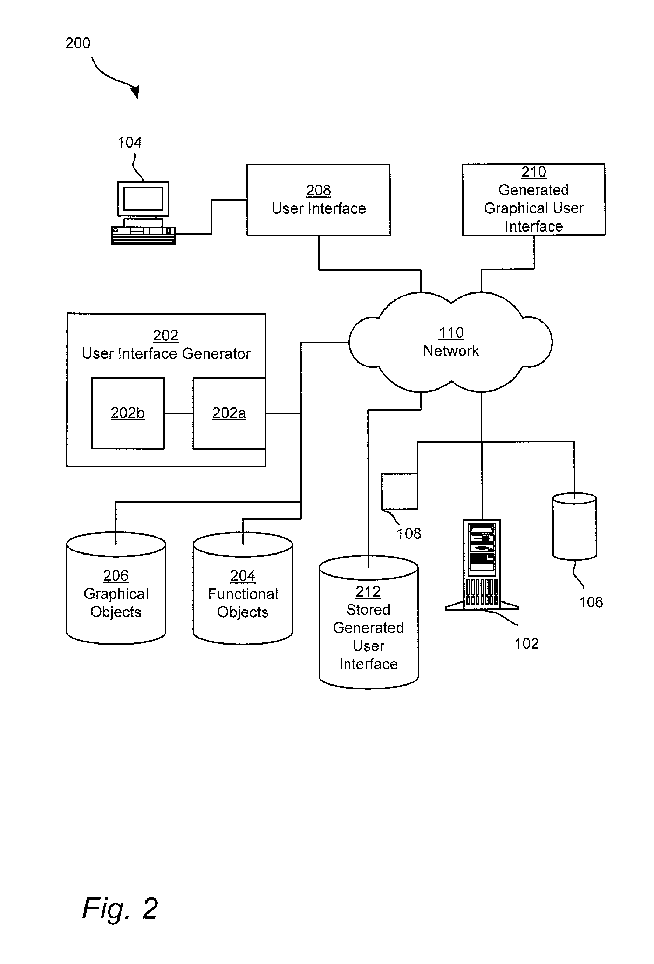

Fig. 2 is a schematic diagram of a building control system 200. Similar to the building control system 100 of Fig. 1 the building control system 200 comprises a server 102, a database 106, a user terminal 104, a network 110 and a control object 108. It is to be understood that the building control system 200 in general may comprise at least one of the entities illustrated in Fig. 1 or in Fig. 2. The building control system 200 further comprises a graphical user interface (GUI) generator 202 which may be operatively coupled to the network 110, thereby further operatively coupling the GUI generator 202 with the server 102, the database 106, the user terminal 104, the network 110 and the control object 108. Thereby the GUI generator 202 may have access to the network addresses of the server 102, the database 106, the user terminal 104, the network 110 and the control object 108. The GUI generator 202 may be utilized in order to generate a graphical user interface for the building control systems 100, 200. Particularly the GUI generator 202 may comprise a communications interface functional block 202a. The communications interface functional block 202a may be implemented, for example, in a receiver and transmitter and/or a transceiver. The communications interface functional block 202a may be arranged to receive specification of a control object in the building control system 100, 200. The communications interface functional block 202a may further be arranged to receive selection of a functional object from a set of predefined functional objects. The functional objects may correspond to control functionalities of the building control system 100, 200. For example, the functional objects may be building selectors, floor selectors, room selectors, object selectors, etc. The predefined functional objects may be stored in a database 204. The GUI generator 202 may further comprise a processing unit functional block 202b. The processing unit functional block 202b may be implemented in a so-called central processing unit (CPU), a field programmable gate array (FPGA) circuit, an application specific integrated circuit (ASIC), or the like. The processing unit functional block 202b may be arranged to associate the control object and the functional object. The processing unit functional block 202b may further be arranged to generate a panel, thereby generating the graphical user interface.

A functional block representing the thus generated graphical user interface is schematically indicated at reference numeral 210. Previously generated graphical user interfaces (or representations thereof) may be stored in a database 212.

The building control system 200 further comprises a user interface 208 for displaying the thus generated graphical user interface. The user interface 208 may thus comprise a display and further means for user interaction, such as a keyboard, a computer mouse, etc. A user may interact with the GUI generator 202 via the user interface 208. The user interface 208 may be coupled to or be part of the user terminal 104.

The building control system 200 further comprises a database 206 comprising a set of predefined graphical objects. The predefined graphical objects may be used to represent the control objects of the building control system 100, 200. For example, the predefined graphical objects may correspond to items of a blueprint (such as floor plans and/or room plans) of a building, trend charts, temperature indicators, time indicators, etc.

The GUI generator 202 may also be implemented as a computer program product. The computer program product may comprise computer program code stored on a computer-readable storage medium. When executed on a processing unit the computer program product may then carry out a method for generating a graphical user interface for a building control system.

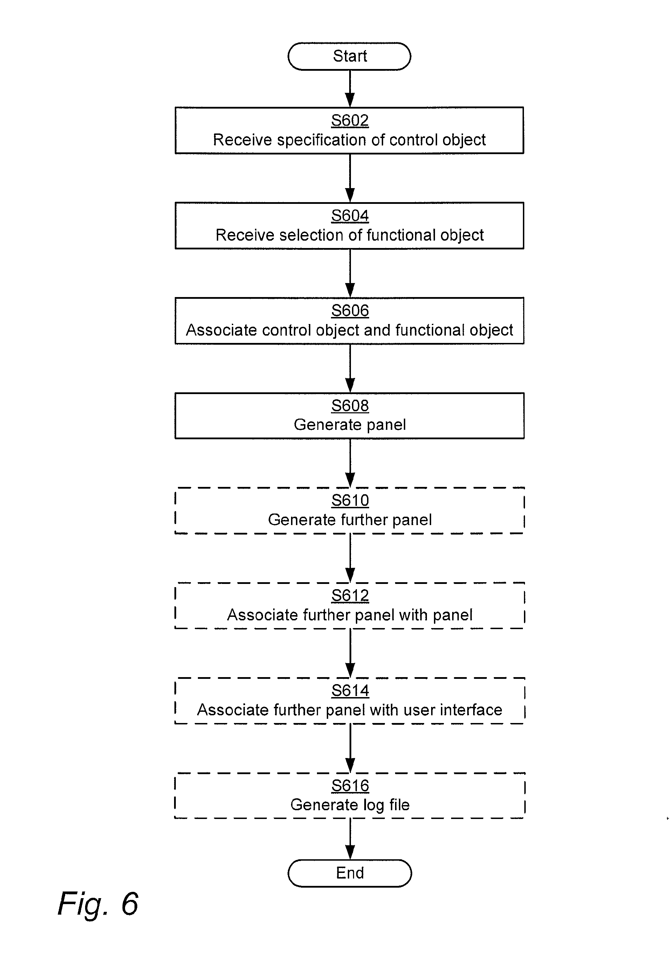

Such a method will be disclosed with references to the flowchart of Fig. 6 which is a flowchart of a method for generating a graphical user interface for a building control system 100, 200. In the below exemplary embodiment it is assumed that a graphical user interface for exposing and/or controlling properties of a control object in the building control system 100, 200 is to be generated.

In a step S602 specification of a control object in the building control system 100, 200 is received. As noted above the control object is associated with an address. The specification may be received via the communications interface 202a of the GUI generator 202. The specification may be initiated by (a user of) the user interface 208. For example, the control object may be specified by a user selecting the control object from a list of control objects or from specifying the control object by typing in an identification, such as a name or a (relative) address, of the control object. As a first example, the selected control object may represent a floor of a building in the building control system 100, 200. As a second example the selected control object may represent a field device in the building control system 100, 200.

In a step S604 selection of a functional object from a set of predefined functional objects is received. For the instant first example the selected functional object may correspond to a floor selector. For the instant second example the selected functional object may correspond to an object indicator. The functional object is associated with a graphical object from the above disclosed set of predefined graphical objects. For the instant first example the graphical object may comprise a floor plan representing a (selected) floor. For the instant second example the graphical object may comprise a trend log.

Information in the graphical object may be dependent on the (relative) address of the control object. Therefore, in a step S606 the control object of the building control system and the selected functional object are associated. In more detail the graphical object is provided with a pointer to the (relative) address of the control object. By providing the (relative) address of the control object the graphical object may receive data from the (specific) selected control object.

In a step S608 a panel comprising the graphical object is generated. The graphical object is provided with data relating to a target value of the pointer. The target value may correspond to a value measured by the control object or to a value of the control object itself. For example, if the control object is a temperature indicating device the target value may correspond to a temperature measured by the temperature indicating device. For example, if the control object is a control program the target value may correspond to a current status and/or value of a parameter of the control program. Thereby the graphical object may be provided with information needed for the graphical object to be correctly displayed. For the instant first example the graphical object may be a floor plan of the floor associated with the (relative) address of the control object. For the instant second example the graphical object may be a trend log arranged to indicate a temperature measured by and received from the control object. Thereby the graphical user interface is generated.

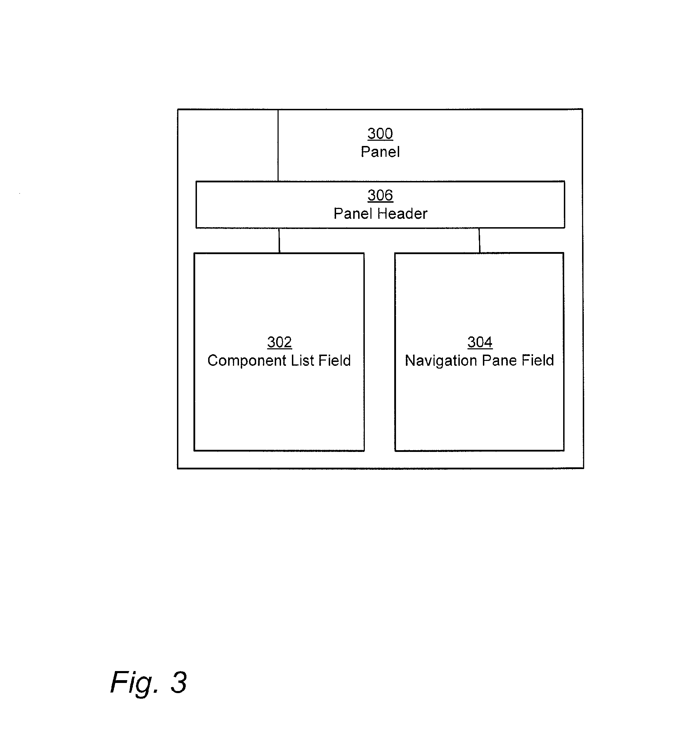

The panel may comprises a component list field and a navigation pane field. The thus generated panel may thereby define a simple layout. The content of the component list field and a navigation pane field may be populated using links to objects e.g. graphics, trend charts, schedules, alarm lists, video (either pre-recorded or live view), etc. Particularly, the graphical object may be associated with the navigation pane field. The control objects are thereby associated with viewers/tools displaying them as a part of the panel. Fig. 3 is a schematic diagram of a panel 300 according to an embodiment. As indicated in Fig. 3 the panel 300 comprises a component list field 302 and a navigation pane field 304. The panel 300 further comprises a panel header 306. The panel 300 may be arranged such that selection of components in the component list field 302 affects contents of the navigation pane field 304. As indicated in Fig. 3 communications between the component list field 302 and the navigation pane field 304 is relayed via the panel header 306. Thereby the panel header 306 may be regarded as controlling communications between the component list field 302 and the navigation pane field 304. For example, upon receiving a selection of an object in the component list field 302 (such as selection of a particular floor in a floor selector) a request comprising the selected data is transmitted to the panel header 306. The panel header 306 then resolves the selected data and transmits a data request to an address associated with the selected data. Upon receipt of the data requested in the data request the panel header 306 forwards the data (such as a floor plan for selected particular floor) to the navigation pane field 304. The panel header 306 may further be associated with a displayable toolbars for controlling behavior of viewers/tools in the navigation pane field. This toolbar may be switchable between an on state and an off state, where it is, when displayed on a user interface, visible in the on state and non-visible in the off state.

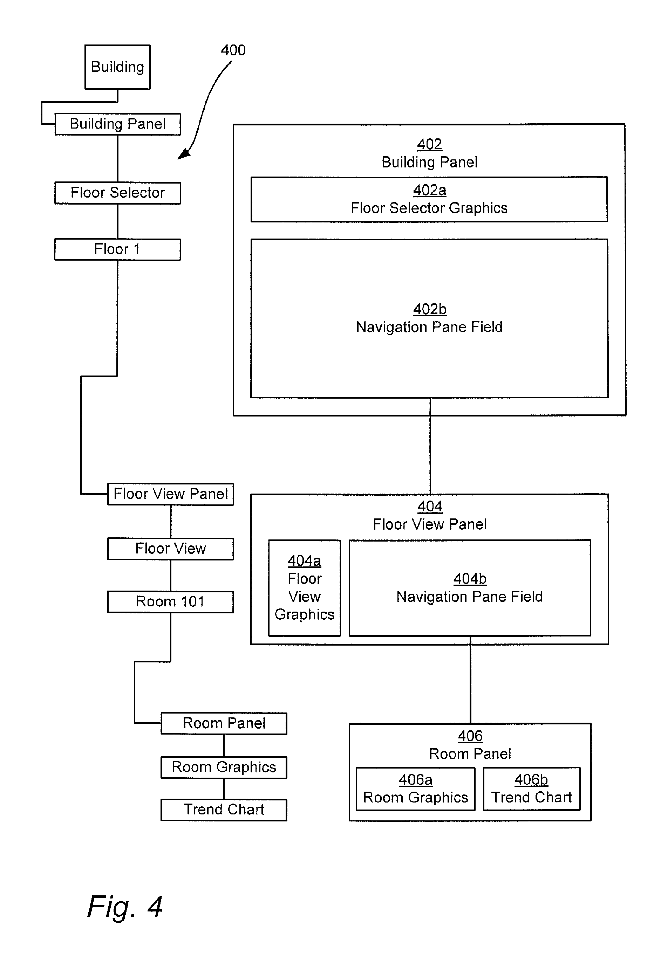

Fig. 4 is a schematic diagram of hierarchically ordered panels according to an embodiment. The right part of Fig. 4 schematically illustrates hierarchically ordered panels 402, 404, 406 and the left part of Fig. 4 schematically illustrates a corresponding hierarchical file tree structure 400 thereof. An engineering tool and/or operating workstation software comprising a computer-implementation of the hierarchical file tree may, in combination with a user interface, be utilized to at least partly generate a panel as disclosed above. For example, the disclosed hierarchical file tree structure may be used in a drop-and-drag context. Thereby the disclosed hierarchical file tree structure may be manipulated such that panels are added, copied, deleted, or amended. When a panel is copied the properties of the panels may be adapted to the location to which the panel is copied. For example, relative addresses associated with control objects in a panel may be adapted to the location to which the panel is copied. Thereby new relative (or absolute) addresses for control objects in the panel do not need to be (manually) entered. The thus described engineering tools and/or operating workstation software including a framework for generating panels, panels can via the use of relative addressed links become reusable across several locations. For example, a panel generated for a first floor (wherein the first floor e.g. comprises a number of rooms) may be reused for a second floor, and so on.

The hierarchically ordered panels of Fig. 4 may have been generated according to an iterative procedure of the above disclosed method. The method may thus further comprise, in a step S61 0, generating a further panel (also denoted a second panel). In Fig. 4 the building panel 402 represents a first (root) panel. As noted above the panel may comprises a component list field and a navigation pane field. The method may further comprise, in a step S612, associating the further panel with the navigation pane field of the first panel. The component list field 402a of the building panel 402 comprises floor selector graphics and the navigation pane field 402b comprises a further (node) panel, namely a floor view panel 404. Thus in the instant example the further panel is the floor panel 404. In a step S614 the at least one second panel (in the instant example the floor panel 404) may be associated with the graphical user interface. In other words, a panel 404 may be displayable in a panel 402.

In turn the floor view panel 404 comprises a component list field 404a comprising a floor view graphic and the navigation pane field 404b comprises a further (node) panel, namely a room panel 406. The component list field 406a of the room panel 406 comprises room graphics and the navigation pane field 406b comprises a trend chart. The further (node) panels 404, 406 may thus be (hierarchically) linked to the first (root) panel 402. Thus, by iteratively performing steps S602 to S614 a composite panel comprising a plurality of sub-panels may be generated.

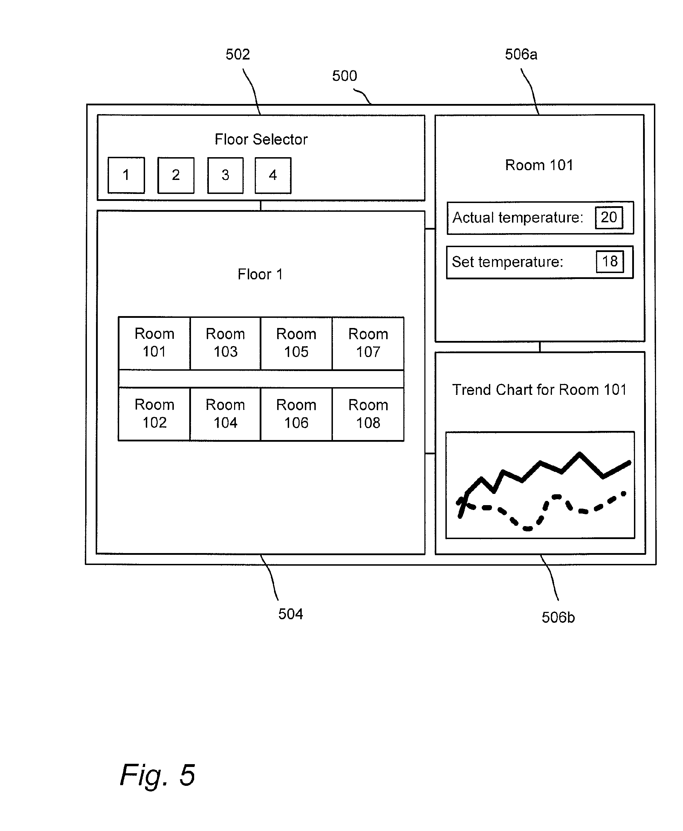

As illustrated in Fig. 4 the floor view panel is associated with one room (denoted "Room 101 "). However, by iteratively repeating (parts of) the above steps S602 to S614 a room panel associated with a second room may be generated. The room panel of said second room may in turn also be associated with a room graphics, a trend chart, or the like. Particularly, the panel for second room may be generated by duplicating the room panel for the first room ("Room 101 "). A straight-forward duplication is made possible by the use of relative addressing. Thus, when relating the thus generated panel for the second room with an identification (such as "Room 102") the room graphics and trend charts of the second room will automatically be associated with the associated parameters pertaining to the identified room. Similarly, a floor view panel for a second floor of the building may be generated by iteratively repeating (parts of) the above steps S602 to S614. Again, by using relative addressing the rooms associated with the floor view panel for the second floor will automatically be associated with the associated parameters pertaining to the identified rooms. This is also illustrated in Fig. 5.

Fig. 5 is a schematic diagram of a composite panel 500 according to an embodiment. The composite panel 500 may be generated by iteratively performing steps S602 to S614. Similar to Fig. 4 the composite panel 500 comprises a building panel 502, which in turn comprises a floor panel 504 indicating floors "1", "2", "3", and "4", which floor panel 504 in turn comprises a room panel 506 indicating rooms "Room 101 ", "Room 101 ", "Room 102", "Room 103", "Room 104", "Room 105", "Room 106", "Room 107", "Room 108", which floor panel 504 in turn comprises room graphics 506a pertaining to "Actual temperature" and "Set temperature" for "Room 101" and a trend chart 506b for "Room 101 ". Thus the building panel 502 is in fact associated with a number of floor panels; one for "Floor 1 ", one for "Floor 2", one for "Floor 3" and one for "Floor 4", of which the floor panel 504 for "Floor 1" is shown in Fig. 5. Similarly each floor panel is associated with a number of rooms; the floor panel for "Floor 1" is associated with an individual room panel for each room "Room 101", "Room 101 ", "Room 102", "Room 103", "Room 104", "Room 105", "Room 106", "Room 107" and "Room 108".

Panels 502, 504 and 506 may comprises layout information. The layout information may pertain to the size of the panel 502, 504 and 506 when displayed on a user interface. The layout information may pertain to the orientation of the component list field and the navigation pane field of the panel. The layout information may also pertain to orientation and/or visibility on a user interface of a navigation list of the panel. The navigation list may thus be arranged to, via the user interface, receive instructions relating to properties of the panel.

Since the component list field of the building panel 502 corresponds to the floor panel 504 the floor panel 504 is coupled to the building panel 502. A parameter of the building panel 502 may affect a value of the floor panel 504. For the instant example a specification of a specific floor in the building panel 502 may result in the floor panel 504 being associated with said specific floor.

Further, since the component list field of the floor panel 504 corresponds to the room panel 506 the room panel 506 is coupled to the floor panel 504 which in turn is coupled to the building panel 502, thus coupling the room panel 506 with the building panel 502. A parameter of the floor panel 504 may affect a value of the room panel 506. For the instant example a specification of a specific room in the floor panel 504 may result in the room panel 506 being associated with said specific room.

As noted above a panel may have a panel header. Advantageously the panels are coupled via the panel headers: the component list field of the building panel 502 may be coupled to the panel header of the floor panel 504; the component list field of the floor panel 504 may be coupled to the panel header of the room panel 506, and so on. The coupling is instantiated during generation of the panels. Particularly the coupling is facilitated by the use of relative addressing of control objects as employed when a panel is generated. Thus, for the instant example, "Set temperature" in room graphics 506a may have a dialog box arranged to receive an input value (for example via a user interface). Upon receiving an input value the value is sent utilizing relative addressing and via the panel headers for panels 506, 504 and 502 to the control object associated with said "Set temperature". Thereby the value of the associated control object may be affected. Similarly, the value displayed as "Actual temperature" and the values indicated by the trend chart 606b may be received from the associated control object via the panel headers for panels 506, 504 and 502.

As indicated in Figs. 4 and 5 a panel may in turn include several panels (ordered in a hierarchical fashion), docked to the edges (top, left, right or bottom) of the panel and one navigation pane field (or work area). The work area can have an initial address (link) and the content of the panes may communicate with the work area (via a hierarchy of panel headers). Graphical objects may comprise at least one selectable link. The destination of the selectable link may be specified by the address of the related building control object. As a user of the graphical user interface interacts with the panel e.g. by clicking on a link in a graphics displayed in a pane, the target for the link is displayed as the work area of the panel. If a graphics is displayed in the work area and the user clicks on the link the content of the work area may be replaced with the content of the link. Thereby the user can reuse links in graphics to other objects or other panels, displaying them in the work area of a panel.

Since a panel, a composite panel, or even a sub-panel may comprise large amounts of data it may be advantageous to store not the complete panel, composite panel, or sub-panel but instead store a reference to the thus generated panel, composite panel, or sub-panel. The method may therefore further comprise, in a step S616, generating a log file comprising a link to the panel. Such a log file may also enabled straight forward retrieval of an already generated panel. Similarly a log file comprising a link to the generated graphical user interface comprising the panel may be generated and stored for later use. By having a building control system allowing different graphical user interfaces to be stored, the different graphical user interfaces may be distributed in the building control system. Thereby different graphical user interfaces for different categories of users may easily be generated and distributed. In addition, a panel may easily be customized or adjusting the layout to suit the needs or display screens of particular users. The disclosed panels may therefore enable different categories of users (such as engineers, maintenance personnel, end-users and administrators) to have access to a user interface suitable for their needs, combining components from the system into simple views (panels).

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for generating a graphical user interface for a building control system, comprising
- receiving specification of a control object in said building control system, said control object being associated with an address;
- receiving selection of a functional object from a set of predefined functional objects, said functional object being associated with a graphical object from a set of predefined graphical objects;
- associating said control object and said functional object by providing to said graphical object a pointer to said address; and
- generating a panel comprising said graphical object, said graphical object being provided with data relating to a target value of said pointer, thereby generating said graphical user interface.

2. The method according to claim 1, wherein said panel further comprises a component list field and a navigation pane field.

3. The method according to claim 2, wherein said graphical object is associated with said navigation pane field.

4. The method according to claim 2 or 3, wherein said panel is arranged such that selection of components in said component list field affects contents of said navigation pane field.

5. The method according to any one of the preceding claims, further comprising
- denoting said panel as a first panel;
- generating at least one second panel, said at least one second panel being linked to said first panel; and
- associating said at least one second panel with said graphical user interface.

6. The method according to claim 5 when dependent on any one of claims 2 to 4, further comprising
- associating said at least one second panel with said navigation pane field of said first panel.

7. The method according to any one of the preceding claims, further comprising
- generating a log file comprising a link to said panel.

8. The method according to any one of the preceding claims, wherein said panel further comprises layout information.

9. The method according to any one of the preceding claims, wherein said control object is associated with at least one from a control program controlling said building control system and a field device in said building control system.

10. The method according to any one of the preceding claims, wherein said target value relates to a behavior of said control object and wherein said graphical object is arranged to indicate data relating to said behavior.

11. The method according to claim 10, wherein said behavior relates to a measurement of said control object.

12. The method according to any one of the preceding claims, wherein said graphical object comprises at least one selectable link, said selectable link being specified by said address.

13. An apparatus for generating a graphical user interface for a building control system, comprising
- a receiver arranged to receive specification of a control object in said building control system, said control object being associated with an address;
- a receiver arranged to receive selection of a functional object from a set of predefined functional objects, said functional object being associated with a graphical object from a set of predefined graphical objects;
- a processing unit arranged to associate said control object and said functional object by providing to said graphical object a pointer to said address; and
- a processing unit arranged to generate a panel comprising said graphical object, said graphical object being provided with data relating to a target value of said pointer, thereby generating said graphical user interface.

14. A computer program product, comprising computer program code which is stored on a computer-readable storage medium and which, when executed on a processing unit , carries out the method according to any one of claims 1-12.
